# EUROPÄISCHE PATENTSCHRIFT

(11) **EP 0 799 726 B1**
(45) Veröffentlichungstag und Bekanntmachung des Hinweises auf die Patenterteilung: **13.08.2003**
(21) Anmeldenummer: 97102084.7
(22) Anmeldetag: 10.02.1997
(51) Int. Cl.: B60C 1/00, C08K 5/01, C08L 21/00

(54) **Reifenlaufflächen mit geringem Rollwiderstand und verbessertem ABS-Bremsen**
Tire treads having low rolling resistance and improved anti-lock braking
Bandes de roulement de pneumatiques présentant une faible résistance au roulement et freinage amélioré avec AB

(30) Priorität: 02.04.1996 DE 19613194
(43) Veröffentlichungstag der Anmeldung: 08.10.1997
(73) Patentinhaber: Continental Aktiengesellschaft, 30165 Hannover (DE)
(72) Erfinder: Hellermann, Walter, Dr., 46282 Dorsten (DE)

(56) Entgegenhaltungen:
- EP-A- 0 161 793
- EP-A- 0 384 033
- EP-A- 0 548 040
- EP-A- 0 645 423
- EP-A- 0 708 137
- JP-A- 62 175 203

## Beschreibung

Die vorliegende Erfindung betrifft Reifenlaufflächen auf Basis von Polydien-Kautschuken.

Die Reifenlaufflächen nehmen unter den Bauelementen des Reifens eine Sonderstellung ein. Dies liegt vor allem daran, daß die Reifenlauffläche die schmale Kontaktfläche zwischen Fahrzeug und Fahrbahn bildet. Die Eigenschaften eines Fahrzeugs beim Fahren hängen dabei besonders von der Art und Qualität der Reifenlauffläche ab. Eine optimale Reifenlauffläche muß dabei ein umfangreiches Anforderungsprofil abdecken. Neben einem hohen Abriebwiderstand und Allwettereigenschaften, d. h. auch gleichzeitig gute Wintereigenschaften, soll ein niedriger Rollwiderstand vorhanden sein. Fragen der Fahrsicherheit lassen dem Rutschwiderstand, insbesondere auf nasser Fahrbahn, eine sehr hohe Bedeutung zukommen. Dabei erhält neben dem konventionellen Blockierbremsen das in den letzten Jahren immer stärker verbesserte und weit verbreitete Antiblockiersystem (ABS) eine zunehmende Bedeutung auch für die Entwicklung von neuen Laufflächenpolymeren, die speziell auf die besonderen Gegebenheiten beim ABS-Bremsen abgestimmt sein muß. Die EP-OS 0 430 617 und EP-OS 0 500 338 beschreiben Laufflächenkautschuke für verbessertes ABS-Bremsen mit den üblichen aromatischen Ölen als Weichmacher.

Zur Beurteilung des Naßrutschverhaltens im Labormaßstab hat die Raumtemperaturelastizität eine zentrale Bedeutung. Sie hat sich in der Vergangenheit bei der Bewertung des Naßrutschverhaltens beim Emulsions-SBR bewährt.

Um gute Bremswerte zu erreichen, ist es notwendig, Laufflächenpolymere mit hoher Dämpfung, d. h. mit besonders niedriger Raumtemperaturelastizität einzusetzen. Dies bedingt im allgemeinen die Herstellung von Polymeren mit hoher Glastemperatur gemäß der DE-A-37 24 871. Es handelt sich hierbei um durch anionische Polymerisation hergestellte ungesättigte, elastomere AB-Blockcopolymerisate bestehend aus
- 40 bis 80 %: eines Blockes A auf Basis Butadien (gleichmäßig verteilter Vinylgruppengehalt von 8 bis 60 %),
- 60 bis 20 %: eines Blockes B auf Basis von
- 0 bis 60 % Butadien,
- 0 bis 60 % Isopren und
- bis zu 45 % Styrol,
wobei der Vinylgehalt der Dieneinheiten 75 bis 90 % beträgt.

Ebenso kommen durch anionische Polymerisation hergestellte Copolymere aus Butadien und Styrol in Frage. Diese Copolymeren (im folgenden mit Lösungs-SBR bezeichnet) bestehen aus einem Gemisch aus Butadien und 15 bis 35 % Styrol, wobei der Vinylgehalt der Butadieneinheiten (bezogen auf Butadien) zwischen 35 und 90 % liegt.

Diese Blockcopolymerisate (Integralkautschuk) oder Lösungs-SBR weisen eine hohe Glastemperatur auf.

Beim Blockierbremsen auf Asphalt und Beton zeigen die Polymeren mit hoher Glastemperatur, d. h. niedriger Raumtemperaturelastizität ein sehr gutes Verhalten. Beim ABS-Bremsen (Antiblockier-System) verschlechtert sich jedoch das Naßrutschverhalten dramatisch. Das bedeutet, daß das in diesen Integralkautschuk (Beispiel 2) eingebaute Naßrutschpotential bei schwachen Beanspruchungen, wie es das ABS-Bremsen auf Asphalt oder Beton bei niedrigen Geschwindigkeiten darstellt, nicht auf der Straße umgesetzt werden kann.

Der Erfindung lag daher die Aufgabe zugrunde, Reifenlaufflächen bereitzustellen, die die Nachteile des Standes der Technik nicht aufweisen. Die gestellte Aufgabe wird erfindungsgemäß entsprechend den Angaben der Patentansprüche gelöst.

Überraschenderweise wurde nun gefunden, daß bei Integralkautschuk beim Austausch der in der Kautschuktechnik üblichen aromatischen Öle durch naphthenische und paraffinische Öle das ABS-Bremsen deutlich verbessert werden kann. Abhängig vom Integralkautschukmodell wird gleichzeitig der Rollwiderstand verbessert, wobei beim Abriebwiderstand keine Einbußen festzustellen sind.

Die erfindungsgemäßen Reifenlaufflächen auf Basis von Polydienkautschuk sowie üblichen Zuschlagstoffen zeigen einen deutlich verbesserten Rollwiderstand und deutlich verbessertes Naßrutschverhalten beim ABS-Bremsen. Der Laufflächenkautschuk weist dabei eine Raumtemperaturelastizität zwischen 10 und 40 % oder ≤ 10 % (bei 22 °C) auf und enthält ein naphthenisches und/oder paraffinisches Öl mit Ruß und/oder einen mineralischen Füllstoff (bei ≤ 10 % kann der Kautschuk auch aromatisches Öl enthalten).

Die naphthenischen und paraffinischen Öle besitzen eine niedrigere Glastemperatur als die aromatischen Öle, so daß beim Einsatz dieser Öle eigentlich eine Verschlechterung im Naßrutschen zu erwarten war [siehe W. A. Schneider, F. Huybrechts, K. H. Nordsiek "Kautschuk, Gummi, Kunststoffe" 44, (1991), 528].

Es war also nicht naheliegend, daß durch Austausch des üblichen aromatischen Prozeßöls gegen ein naphthenisches oder paraffinisches Öl oder Blends aus naphthen- oder praffinischem Öl das ABS-Bremsen beim Integralkautschuk-Modell deutlich verbessert wird.

Der Rollwiderstand wird durch diese Maßnahme nicht negativ beeinflußt.

Als Laufflächenkautschuke werden eingesetzt:

### AB-Blockcopolymerisate aus

- 40 bis 80 %: eines Blockes A auf Basis Butadien (gleichmäßig verteilter Vinylgruppengehalt von 8 bis 60 %),
- 60 bis 20 %: eines Blockes B auf Basis von
- 0 bis 60 % Butadien,
- 0 bis 60 % Isopren und
- bis zu 45 % Styrol,
wobei der Vinylgehalt der Dieneinheiten 75 bis 90 % beträgt.

Vorzugsweise enthält das AB-Blockcopolymerisat
- 50 bis 75 % Butadien-1,3
- 5 bis 35 % Isopren und
- 5 bis 25 % Styrol.

### ABC-Blockcopolymerisate aus

- 40 bis 75 %: eines Blockes A aus Butadien- und Styol- oder Isopreneinheiten mit einem Vinyl- bzw. Isopropylengruppengehalt (V) von weniger als 15 %,
- bis 25 %: eines Blockes B aus Butadien- und Styrol- oder Isopreneinheiten (V > 70 %) oder
- bis 25 %: eines Blockes B' aus Styrol-, Isopren- und gegebenenfalls Butadieneinheiten (V < 15 %) und
- 20 bis 55 %: eines Blockes C aus Styrol-, Isopren- und gegebenenfalls Butadieneinheiten (V > 70 %)
oder Copolymere aus Butadien und Styrol
mit 65 bis 85 % Butadien-1,3
und 35 bis 15 % Styrol, wobei der
Vinylgehalt der Dieneinheiten zwischen 35 bis 90 % beträgt.

Besonders bevorzugt sind hohe Vinylgehalte > 50 % und Styrolgehalte > 25 %.

Das Verfahren zur Herstellung der AB- oder ABC-Blockcopolymerisate durch anionische Polymerisation der Monomeren in einem inerten organischen Lösemittel in Gegenwart einer Li-organischen Verbindung und eines Cokatalysators ist dadurch gekennzeichnet, daß man zunächst einen Block A durch Polymerisation von Butadien in Abwesenheit eines Cokatalysators herstellt. Danach stellt man einen Block B her, indem man, gegebenenfalls in Gegenwart von Styrol, entweder Butadien und Isopren in Abwesenheit eines Cokatalysators polymerisiert oder indem man die Polymerisation von Butadien in Gegenwart eines Cokatalysators fortsetzt. Anschließend polymerisiert man ein Gemisch aus Butadien und Isopren, gegebenenfalls auch Styrol, in Gegenwart eines Cokatalysators (Block C).

Grundsätzlich besteht die Möglichkeit, zu Beginn der Polymerisation jedes Blocks die für dessen Herstellung jeweils benötigten Mengen an Monomeren dem Reaktionsgefäß zuzusetzen. Man kann aber auch bereits zu Beginn der Polymerisation des Blocks A die Gesamtmenge Butadien vorlegen und den Block B durch Zugabe des Cokatalysators oder des Isoprens beginnen. Für die Zugabe des Isoprens gelten die gleichen Überlegungen. Die Mitverwendung von Styrol als Comonomeres der Blöcke B und/oder C ist bevorzugt.

Im folgenden soll das Herstellungsverfahren der AB- oder ABC-Blockcopolymerisate detailliert beschrieben werden.

Als Reaktionsmedium wird ein inertes organisches Lösemittel verwendet. Geeignet sind insbesondere Kohlenwasserstoffe mit 6 bis 12 C-Atomen, wie Pentan, Hexan, Heptan, Oktan und Dekan sowie deren cyclische Analogen. Geeignet sind auch aromatische Lösemittel, wie z. B. Benzol, Toluol, Xylole u. a. Selbstverständlich können auch Gemische der vorstehend beschriebenen Lösemittel eingesetzt werden.

Als Katalysator werden Alkyllithiumverbindungen eingesetzt, die durch Umsetzung von Lithium mit den entsprechenden Alkylhalogeniden leicht zugänglich sind. Die Alkylreste weisen 1 bis 10 C-Atome auf. Einzelne Wasserstoffatome können durch Phenylreste substituiert sein. Folgende Alkyllithiumverbindungen sind besonders geeignet: Methyllithium, Ethyllithium, Pentyllithium; bevorzugt wird n-Butyllithium.

Zur Verbesserung des kalten Flusses wird wenigstens eine Polymerisationsstufe vorteilhafterweise in Anwesenheit geringer Mengen eines Verzweigungsmittels, wie z. B. Divinylbenzol (DVB), durchgeführt. Bezogen auf 100 Teile Monomere werden maximal 0,5 Teile DVB eingesetzt. Ein solcher Zusatz entfällt, wenn nach der Polymerisation eine Kupplung vorgesehen ist.

Art und Menge von Katalysator und Verzweigungsmittel werden im allgemeinen so ausgewählt, daß das erhaltene Blockcopolymerisat folgende Eigenschaften aufweist:

| | |
|---|---|
| Mooney-Viskosität (ML₁₋₄, 100 °C, DIN 53 523) | 35 bis 120 |
| Uneinheitlichkeit U = (Mw/Mn) - 1, bestimmt durch gelper-meationschromatografische Analyse (GPC-Analyse) | 0,6 bis 3,0 |
| Defo-Elastizität (80 °C, DIN 53 514) | ≥ 20 |

Bei dem vorliegenden Verfahren wird der Block B in Anwesenheit eines Cokatalysators hergestellt.

In diesem Fall ist man daran interessiert, Polymerisat mit einem möglichst hohen Anteil von 1,2- und/oder 3,4-Struktureinheiten zu erhalten.

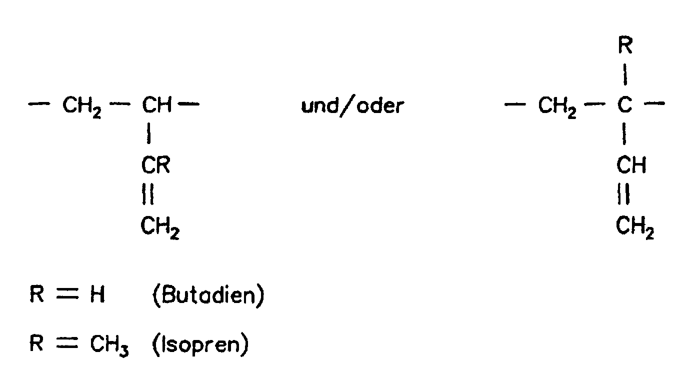

Die Auswahl der Cokatalysatoren richtet sich daher nach ihrer Fähigkeit, die Mikrostruktur zu regeln, d. h. den Verlauf der Polymerisation im Hinblick auf eine möglichst vollständige Bildung von 1,2- und/oder 3,4-Struktureinheiten zu lenken.

Der Cokatalysator wird im allgemeinen aus der Gruppe
- der Ether,
- der tertiären Amine oder
- der etherhaltigen tertiären Amine
ausgewählt. Selbstverständlich können auch Gemische verschiedener Cokatalysatoren eingesetzt werden.

Geeignete Ether umfassen insbesondere
- Dialkylether des Ethylenglykols und Diethylenglykols, deren Alkylgruppen jeweils bis zu 4 C-Atome aufweisen, wie Ethylenglykoldiethylether (DEE).

Insbesondere bei der Herstellung von verzweigten Blockcopolymeren werden Ether der allgemeinen Formel

R₁ - O - CH₂ - CH₂ - O - R₂

bevorzugt, wobei R₁ und R₂ Alkylreste mit einer unterschiedlichen Zahl von C-Atomen aus der Gruppe Methyl, Ethyl, n- und iso-Propyl sowie n-, iso-, sek.- und tert.-Butyl sind. Vorzugsweise beträgt die Summe der C-Atome der beiden Reste R₁ und R₂ 5 bis 7, insbesondere 6. Ein besonders geeigneter Ethylenglykolether ist die Verbindung mit R₁ = Ethyl und R₂ = tert.-Butyl. Die Glykolether sind beispielsweise nach dem Prinzip der Williamson-Synthese aus einem Natriumalkoholat und einem Alkylhalogenid zugänglich. Die Ether der Formel

R₁ - O - CH₂ - CH₂ - O - C(CH₃)₃

können in einfacher Weise durch Umsetzung des entsprechenden Alkohols

R₁ - O - CH₂ - CH₂ - OH

mit Isobuten in Gegenwart eines sauren Ionenaustauschers hergestellt werden.

Geeignete tertiäre Amine sind z. B. N,N,N',N'-Tetramethylethylendiamin, N,N,N',N'-Tetraethylethylendiamin und Triethylendiamin.

Geeignete etherhaltige Amine sind N-Methylmorpholin und N-Ethylmorpholin.

Der Cokatalysator wird in einem Verhältnis von 2 : 1 bis 30 : 1, insbesondere 2 : 1 bis 15 : 1, bezogen auf die Molzahl des Katalysators, eingesetzt. Bei höheren Temperaturen werden im allgemeinen größere Mengen an Cokatalysator benötigt, um die gewünschte Mikrostrukturregelung zu erzielen. Reaktionstemperaturen von 100 °C sollten nicht überschritten werden. Es ist auch möglich, bei steigender oder fallender Temperatur zu arbeiten; jedoch ist in diesem Fall dafür Sorge zu tragen, daß die Mikrostruktur nicht grundsätzlich verändert wird.

Bei der Herstellung des Blocks A hängt es von dem gewünschten Vinylgruppengehalt ab, wieviel Cokatalysator zugegen sein sollte.

Bei der Herstellung von Block B und gegebenenfalls A wird Styrol als Comonomer zugesetzt. Durch geeignete Maßnahmen ist dafür Sorge zu tragen, daß der Gehalt an Polystyrolblöcken im AB-Blockcopolymerisat 2 Massen-% nicht überschreitet. Ein Verfahren zur Bestimmung des Gehalts an Polystyrolblöcken ist in dem Standardwerk Houben-Weyl "Methoden der Organischen Chemie", Band 14/1 (1061), Seite 698, angegeben.

Es ist bekannt, daß einige als Cokatalysatoren vorgeschlagene Verbindungen die Eigenschaft haben, die Ausbildung von Polystyrolblöcken zu unterdrücken. Die gleiche Eigenschaft haben Verbindungen, die als Randomizer bezeichnet werden und meist Kaliumsalze von Alkoholaten sowie organischen Carbon- und Sulfonsäuren sind.

Gemäß einer besonderen Ausführungsform des Verfahrens können die nach Abschluß der Polymerisation vorliegenden "lebenden Polymere" mit einem Kupplungsmittel zu verzweigten oder sternförmigen Blockcopolymerisaten umgesetzt werden.

Geeignete Kupplungsmittel sind Polyepoxide, wie epoxidiertes Leinsamenöl, Polyisocyanate, Polyketone, wie 1,3,6-Hexantrion, Polyanhydride, wie beispielsweise das Dianhydrid der Pyromellithsäure und Dicarbonsäureester, wie Adipinsäuredimethylester. Besonders geeignet sind
- die Tetrahalogenide der Elemente Si, Ge, Sn und Pb, insbesondere SiCl₄.
- Organische Verbindungen der allgemeinen Formel Rₙ[SiHal₃]ₙ, mit n = 1 bis 6, insbesondere n = 1 und 2. Hierbei ist R ein n-wertiger organischer Rest, beispielsweise ein aliphatischer, cycloaliphatischer oder aromatischer Rest mit 6 bis 16 C-Atomen. Beispielhaft seien 1,2,4-Tris(2-trichlorsilylethyl)-cyclohexan, 1,8-Bis(trichlorsilyl)-octan und 1-(Trichlorsilyl)-octan genannt.
- Organische Verbindungen, die mindestens einmal die Gruppierung > SiHal₂ enthalten, wie z. B. Dimethylsilylchlorid.
- Halogensilanwasserstoffe der allgemeinen Formel Si(H)ₘ(Hal)₄₋ₘ mit 3 ≥ m ≥ 1.
- Di- und Trivinylbenzole, wie z. B. 1,4-Divinylbenzol.

Es hat sich als zweckmäßig erwiesen, als Kupplungsmittel Divinylbenzol zu verwenden.

Das Verfahren kann sowohl diskontinuierlich als auch kontinuierlich betrieben werden.

Als Lösemittel wird ein Kohlenwasserstoffgemisch eingesetzt, das zu etwa 50 % aus Hexan besteht. Weitere Bestandteile dieses hydrierten C₆-Schnitts sind insbesondere Pentan, Heptan und Oktan sowie deren Isomere. Das Lösemittel wird über einem Molekularsieb der Porenweite 0,4 nm getrocknet, so daß der Wasseranteil unter 10 ppm gesenkt wird, und anschließend mit N₂ gestrippt.

Die organische Lithiumverbindung ist n-Butyllithium, die, wenn nicht anders angegeben, in Form einer 20gewichtsprozentigen Lösung in Hexan zur Anwendung kommt.

Die Monomeren Isopren und Styrol werden vor ihrem Einsatz 24 Stunden über Calciumhydrid unter Rückfluß gekocht, abdestilliert und mit n-Butyllithium in Gegenwart von o-Phenanthrolin austitriert.

Die Glykolether werden über Calciumhydrid destilliert und anschließend mit n-Butyllithium in Gegenwart von o-Phenanthrolin austitriert.

Das Divinylbenzol (DVB) stellt ein Gemisch des m- und p-Divinylbenzols dar und wird in Form einer 64%igen Lösung in Hexan eingesetzt. Die Bestimmung des Umsatzes erfolgt, indem man den Feststoffgehalt nach Abdampfen des Lösemittels und der Monomeren bestimmt.

Die Bestimmung der Mikrostruktur erfolgt IR-spektroskopisch.

Als Kupplungsausbeute wird der Prozentanteil an Kautschuk angesehen, der nach der Umsetzung mit einem Kupplungsmittel eine sternförmige Struktur aufweist und sich gegenüber dem ungekuppelten Kautschuk durch ein erheblich höheres Molekulargewicht auszeichnet. Die Bestimmung erfolgt mit der GPC-Analyse, wobei Tetrahydrofuran als Lösemittel und Polystyrol als Säulenmaterial eingesetzt wird. Die Polymerisate werden mit einem Lichtstreuungsdetektor charakterisiert. Zu diesem Zweck werden dem Reaktor vor Zugabe des Kupplungsmittels und zu Ende der Reaktion Proben entnommen. Die Defo-Härte (DH) und die Defo-Elastizität (DE) werden nach den üblichen Meßmethoden bestimmt (DIN 53 514).

Die erfindungsgemäßen Öle oder beliebige Kombinationen aus diesen Ölen können folgendermaßen charakterisiert werden (s. dazu Kautschuk + Gummi Kunststoffe 39. Jahrgang Nr. 9/86, S. 816):

| | Paraffinisch | Paraffinisch/ naphthenisch | Naphthenisch | Naphthenisch/ aromatisch |
|---|---|---|---|---|
| C_{A} (aromatisch) | < 10 | < 15 | 0 - 30 | 25 - 40 |
| C_{N} (naphthenisch) | 20 - 30 | 25 - 40 | 30 - 45 | 20 - 45 |
| Cₚ (paraffinisch) | 55 - 75 | 55 - 65 | 35 - 55 | 25 - 45 |
| C =̂ Kohlenstoffatom | | | | |

sie können im Bereich von 10 phr bis 50 phr zum Einsatz kommen, d. h. die Ölmenge richtet sich jeweils nach der Einsatzmenge des aktiven, verstärkenden Füllstoffs.

Die erfindungsgemäßen Laufflächen können sowohl naphthenisches oder paraffinisches Öl oder einen beliebigen Blend aus paraffinischem, paraffinischem/naphthenischem, naphthenischem und naphthenischem/aromatischem oder paraffinisch/aromatischem Öl in der oben angegebenen Spezifikation enthalten. Bevorzugt wird naphthenisches Öl eingesetzt. Anstelle eines üblichen aktiven Rußes kann auch ein mineralischer Füllstoff (z. B. Kieselsäure) oder eine Kombination aus beiden eingesetzt werden. Der Ruß oder die Kieselsäure werden von 50 bis 90 phr eingesetzt. Bei Blends aus beiden Komponenten beträgt die Menge aus einem üblichen aktiven Ruß und Kieselsäure ebenfalls 50 bis 90 phr.

Der Laufflächenkautschuk wird nach der allgemeinen Vulkanisationsmischung (siehe Beispiele) mit 50 phr Ruß und 15 phr aromatischem Öl hergestellt und einer Laborprüfung unterzogen, wobei die Raumtemperaturelastizität bei 22 °C bestimmt wird. Dabei kann es sich um einen Integralkautschuk oder ein Lösungs-SBR oder um einen beliebigen Blend aus den angegeben Kautschuken handeln.

Liegt die Raumtemperaturelastizität der Mischung zwischen 10 und 40 % bei 22 °C, dann kann durch Austausch des aromatischen Öls gegen ein naphthenisches und/oder paraffinisches Öl sowohl das ABS-Bremsen als auch der Rollwiderstand deutlich verbessert werden. Wird zusätzlich noch der aktive Reifenruß ganz oder teilweise durch einen mineralischen Füllstoff wie z. B. Kieselsäure ausgetauscht, dann kann das ABS-Bremsen und der Rollwiderstand noch stärker verbessert werden. Gleichzeitig werden durch diese beiden Maßnahmen die Wintereigenschaften deutlich angehoben.

Ist die Raumtemperaturelastizität ≤ 10 % bei 22 °C, dann kann durch Austausch des aromatischen Öls gegen ein Öl mit einer niedrigeren Glastemperatur (s. o.) das ABS-Bremsen deutlich verbessert werden. Der Ruß kann ganz oder teilweise durch mineralischen Füllstoff ersetzt werden. Der Austausch von Ruß (aber noch mit aromatischem Öl) gegen einen mineralischen Füllstoff führt ebenfalls zu einer Verbesserung beim ABS-Bremsen.

Die Herstellung der Reifenlaufflächen erfolgt in an sich bekannter Weise durch Vermischen der Kautschukkomponente mit den Zuschlagstoffen. Übliche Zuschlagstoffe sind beispielsweise Ruße, Kieselsäuren, Weichmacher, Beschleuniger, Alterungs- und Ozonschutzmittel und Harze. Das Vermischen erfolgt in üblichen Mischungsaggregaten, z. B. Kneter und Walzwerke. Die dabei einzustellende Temperatur hängt in bekannter Weise von der Zusammensetzung der Compounds und den Mischungsverfahren ab.

Bei den Beispielen mit einem aromatischen Öl handelt es sich um Vergleichsbeispiele.

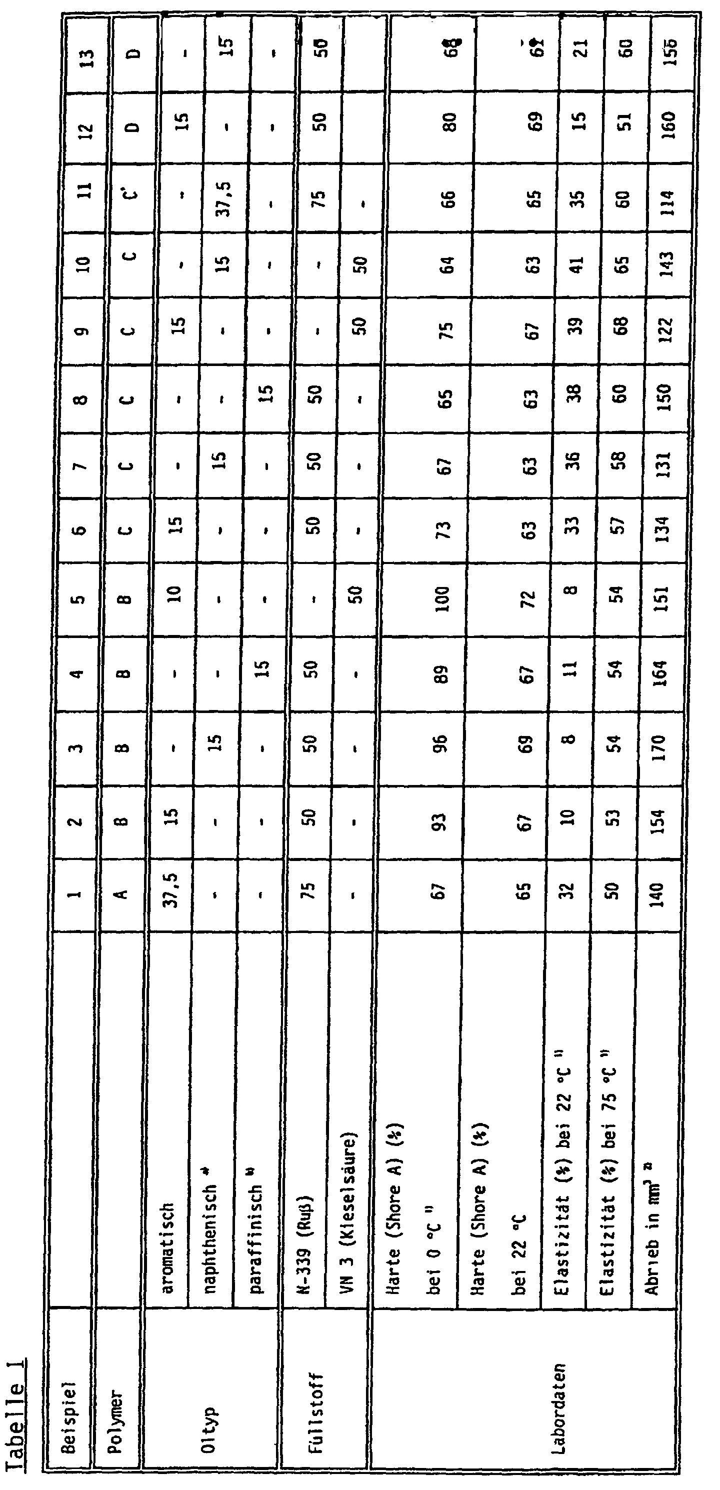

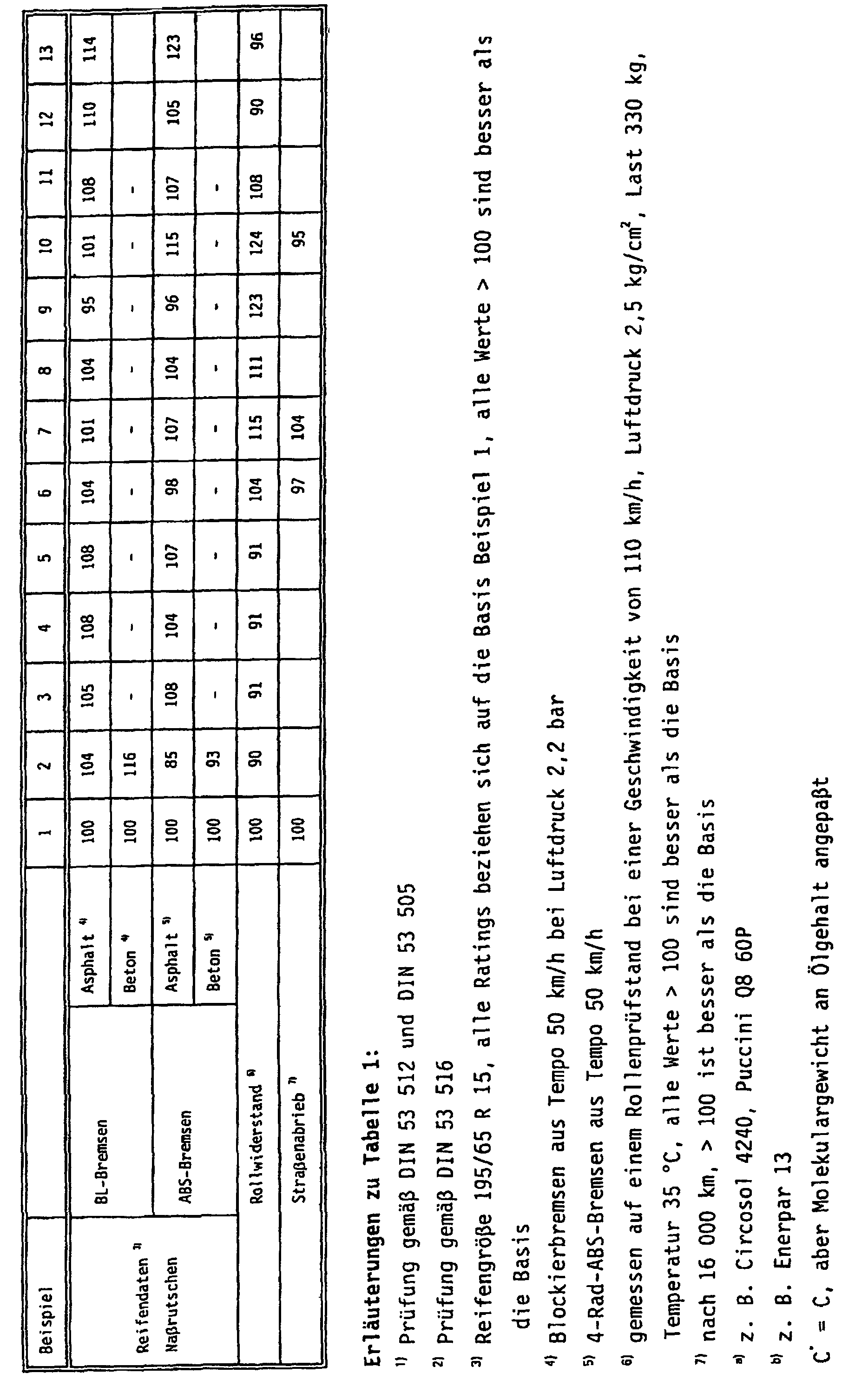

### Polymere und Vulkanisation

### Polymer A (Basis)

BUNA® HÜLS EM 1712 ist ein üblicher Styrol-Butadien-Kautschuk, mit 37,5 Teilen Öl gestreckt, der von der Bunawerke Hüls GmbH hergestellt wird. Abweichend von der später angegebenen, allgemeinen Vulkanisationsmischung wird BUNA® HÜLS EM 1712 in folgender Zusammensetzung vulkanisiert:

| | |
|---|---|
| 137,5 | Teile BUNA® HÜLS EM 1712 |
| 75 | Teile Ruß N 339 |
| 3 | Teile aromatisches Öl |
| 3 | Teile Zinkoxid |
| 2 | Teile Stearinsäure |
| 1 | Teil VULKANOX® 4010 NA |
| 1 | Teil VULKANOX® 4020 |
| 1 | Teil KORESIN® |
| 1,5 | Teile CBS |
| 0,2 | Teile DPG |
| 2 | Teile Schwefel |

### Herstellung AB-Blockcopolymer B

In einem mit trockenem Stickstoff gespülten, ersten V2A-Rührautoklaven werden 275 Teile Hexan, 40 Teile 1,3-Butadien und 0,03 Teile DVB vorgelegt und nach Trocknung über einem Molekularsieb (0,4 mm) unter thermoelektrischer Kontrolle mit n-Butyllithium (Buli) titriert. Die Polymerisation wird bei 50 °C durch Zugabe von 0,032 Teilen n-Butyllithium gestartet. Die Temperatur steigt trotz Kühlung kurzzeitig bis auf maximal 62 °C. Nach 107 Minuten, nachdem das vorgelegte 1,3-Butadien praktisch vollständig umgesetzt ist, wird eine IR-Probe entnommen und wie das Endprodukt aufgearbeitet.

Unmittelbar danach wird innerhalb von 100 Sekunden der Inhalt eines zweiten V2A-Rührautoklaven (40 °C) zugegeben. Dieser enthält eine mit n-Butyllithium titrierte Lösung von 15 Teilen 1,3-Butadien, 30 Teilen Isopren und 15 Teilen Styrol in 190 Teilen Hexan.

Unmittelbar danach werden 2,0 Teile Ethylenglykoldimethylether zugegeben. Die Temperatur wird konstant bei 50 °C gehalten. 4 Stunden nach dem Start wird die Polymerisation durch Zugabe einer Lösung von 0,5 Teilen 2,2-Methylen-(4-methyl-6-tertiär-butylphenol) in 2 Teilen feuchtem Toluol gestoppt. Das Lösemittel wird mit Wasserdampf abdestilliert und das Polymerisat 24 Stunden bei 70 °C im Umluftschrank getrocknet.

| **Mikrostruktur**: | | |
|---|---|---|
| Butadien | 1,4-trans | 23 |
| | 1,2 | 17 |
| | 1,4-cis | 17 |
| Isopren | 3,4 | 24 |
| | 1,4 | 3 |
| Styrol | | 16 |

### Herstellung AB-Blockcopolymer C

In einem mit trockenem Stickstoff gespülten, ersten V2A-Rührautoklaven werden 275 Teile Hexan, 46 Teile 1,3-Butadien und 0,03 Teile DVB vorgelegt und nach Trocknung über einem Molekularsieb (0,4 mm) unter thermoelektrischer Kontrolle mit n-Butyllithium (Buli) titriert. Die Polymerisation wird bei 50 °C durch Zugabe von 0,037 Teilen n-Butyllithium gestartet. Die Temperatur steigt trotz Kühlung kurzzeitig bis auf maximal 65 °C. Nach 100 Minuten, nachdem das vorgelegte 1,3-Butadien praktisch vollständig umgesetzt ist, wird eine IR-Probe entnommen und wie das Endprodukt aufgearbeitet.

Unmittelbar danach wird innerhalb von 85 Sekunden der Inhalt eines zweiten V2A-Rührautoklaven (40 °C) zugegeben. Dieser enthält eine mit n-Butyllithium titrierte Lösung von 30 Teilen 1,3-Butadien, 8 Teilen Isopren und 16 Teilen Styrol in 190 Teilen Hexan.

Unmittelbar danach werden 1,5 Teile Ethylenglykoldimethylether zugegeben. Die Temperatur wird konstant bei 50 °C gehalten. 4 Stunden nach dem Start wird die Polymerisation durch Zugabe einer Lösung von 0,5 Teilen 2,2-Methylen-(4-methyl-6-tertiär-butylphenol) in 2 Teilen feuchtem Toluol gestoppt. Das Lösemittel wird mit Wasserdampf abdestilliert und das Polymerisat 24 Stunden bei 70 °C im Umluftschrank getrocknet.

| **Mikrostruktur:** | | |
|---|---|---|
| Butadien: | 1,4-trans | 24 |
| | 1,2 | 30 |
| | 1,4-cis | 18 |
| Isopren: | 3,4 | 7 |
| | 1,4 | 3 |
| Styrol: | | 18 |

### Copolymerisation von Butadien und Styrol

In einem mit trockenem Stickstoff gespülten V2A-Autoklaven werden 550 Teile Hexan, ein Monomergemisch aus 72 Teilen 1,3-Butadien und 28 Teilen Styrol und 0,7 Teile Ethylglykoltertiärbutylether vorgelegt und nach Trocknung über Molekularsieb (0,4 nm) unter thermoelektrischer Kontrolle mit Butyllithium titriert. Die Polymerisation wurde bei 52 °C durch Zugabe von 0,080 Teilen n-Buli gestartet. Die Temperatur erreichte bei leichter Kühlung nach 10 Minuten 76 °C. Bei dieser Temperatur konnte der Ansatz 30 Minuten nachreagieren. Danach wurden bei dieser Temperatur 0,81 Teile Divinylbenzol zugegeben. Nach 20 Minuten und nach Abkühlen auf 50 °C wurde die Polymerisation durch Zugabe einer Lösung von 0,5 Teilen 2,2'-Methylen-bis(4-methyl-6-tertiär-butyl-phenol) in 2 Teilen feuchtem Toluol gestoppt. Das Lösemittel wurde mit Wasserdampf abdestilliert und das Polymerisat 24 Stunden bei 70 °C im Umlufttrockenschrank getrocknet.

| **Mikrostruktur:** | | |
|---|---|---|
| Butadien: | 1,4-trans | 12 |
| | 1,2 | 50 |
| | 1,4-cis | 9 |
| Styrol: | | 29 |

### Allgemeine Vulkanisationsmischung

Aus den erfindungsgemäßen Laufflächenkautschuken werden Vulkanisationsmischungen folgender Zusammensetzung hergestellt (siehe Tabelle 1):

| | |
|---|---|
| 100 | Teile Laufflächenkautschuk |
| 50 | Teile Ruß N 339 |
| 15 | Teile Öl |
| 3 | Teile Zinkoxid |
| 1 | Teil Stearinsäure |
| 1 | Teil N-Isopropyl-N'-phenyl-p-phenylendiamin (VULKANOX® 4010 NA) |
| 1 | Teil N-(1,3-Dimethylbutyl)-N'-phenylendiamin (VULKANOX® 4020) |
| 2 | Teile KORESIN®, Umsetzungsprodukt von p-tert.-Butylphenol mit Acetylen |
| 1,3 | Teile N-Cyclohexyl-1-benzothiazolsulfonamid (CBS, VULKACIT® CZ) |
| 0,3 | Teile Diphenylguanidin (DPG, VULKACIT® DZ) |
| 1,6 | Teile Schwefel |

Die Produkte VULKANOX® 4010 NA, VULKANOX® 4020, VULKACIT® CZ und VULKA-CIT® DZ sind bei der Bayer AG, Leverkusen, und KORESIN® bei der BASF AG, Ludwigshafen, erhältlich.

Im Falle von 50 phr VN 3 statt 50 phr N-339 wird folgendermaßen beschleunigt:

| | |
|---|---|
| 10 | Teile X-505 |
| 1,6 | Teile Schwefel |
| 1,0 | Teile CZ |
| 2,0 | Teile DPG |

Der Austausch von 50 phr Ruß gegen 50 phr eines mineralischen Füllstoffs, wie etwa VN 3, bewirkt bei dem erfindungsgemäßen Verfahren eine deutliche Verbesserung beim ABS-Bremsen gegenüber der Basis. Der Rollwiderstand bleibt unverändert, d. h. beide Maßnahmen, wie Austausch Ruß gegen VN 3 und Austausch aromatisches Öl gegen naphthenisches Öl, sind hier gleichwertig (Polymer B, Nr. 3, 4, 5).

Das volle Verbesserungspotential dieser Maßnahmen zeigt sich aber am Beispiel des AB-Blockcopolymeren C. Durch Austausch des aromatischen Öls gegen 15 phr naphthenisches Öl verbessert sich bei Beispiel 7 das ABS-Bremsen auf 107 % gegenüber 98 % bei Beispiel 6. Gleichzeitig verbessert sich der Rollwiderstand auf 115 % gegenüber 104 %. Der Austausch von 50 phr Ruß gegen 50 phr VN 3 verbessert zwar den Rollwiderstand auf 123 % (Beispiel 9), das Naßrutschen erreicht auch beim ABS-Bremsen nicht mehr das gute Niveau von Beispiel 6 und 7. Erst der gleichzeitige Austausch von 15 phr aromatischem Öl gegen 15 phr naphthenisches Öl und Ruß gegen Kieselsäure VN 3 (siehe Beispiel 10) bewirkt völlig unerwartet sowohl eine Verbesserung beim ABS-Bremsen auf 115 % als auch beim Rollwiderstand auf 124 % gegenüber der Basis.

## Patentansprüche

1. Reifenlaufflächen auf Basis von Copolymerisaten aus Butadien und Isopren und/oder Styrol und üblichen Zuschlagstoffen mit verbessertem Rollwiderstand und Naßrutschverhalten beim ABS-Bremsen,
**dadurch gekennzeichnet,**
**dass** als Copolymerisate AB-Blockcopolymerisate aus
40 bis 80 % eines Blockes A auf Basis Butadien (gleichmäßig verteilter Vinylgruppengehalt von 8 bis 60 %),
60 bis 20 % eines Blockes B auf Basis von
- bis zu 60 % Butadien,
- 0 bis 60 % Isopren und
- 0 bis 45 % Styrol,
wobei der Vinylgehalt der Dieneinheiten 75 bis 90 % beträgt,
oder ABC-Blockcopolymerisate aus
40 bis 75 % eines Blocks A aus Butadien- und Styrol- oder Isopreneinheiten mit einem Vinyl- bzw. Isopropylengruppengehalt (V) von weniger als 15 %,
bis 25 % eines Blocks B aus Butadien- und Styrol- oder Isopreneinheiten (V > 70 %) oder
bis 25 % eines Blocks B' aus Styrol-, Isopren- und gegebenenfalls Butadieneinheiten (V < 15 %) und
20 bis 55 % eines Blocks C aus Styrol-, Isopren- und gegebenenfalls Butadieneinheiten (V > 70 %)
oder Copolymerisate aus Butadien und Styrol mit
65 bis 85 % Butadien und
35 bis 15 % Styrol, wobei der Vinylgehalt der Dieneinheiten zwischen 35 bis 90 % beträgt,
mit einer Raumtemperaturelastizität zwischen 10 und 40 % (bei 22 °C) eingesetzt werden, die 10 bis 50 phr naphthenisches und/oder paraffinisches Öl mit Ruß und/oder einen mineralischen Füllstoff enthalten.

2. Reifenlaufflächen auf Basis von Copolymerisaten aus Butadien und Isopren und/oder Styrol und üblichen Zuschlagstoffen mit verbessertem Rollwiderstand und Naßrutschverhalten beim ABS-Bremsen,
**dadurch gekennzeichnet,**
**dass** als Copolymerisate AB-Blockcopolymerisate aus
40 bis 80 % eines Blockes A auf Basis Butadien (gleichmäßig verteilter Vinylgruppengehalt von 8 bis 60 %),
60 bis 20 % eines Blockes B auf Basis von
- bis zu 60 % Butadien,
- 0 bis 60 % Isopren und
- 0 bis 45 % Styrol,
wobei der Vinylgehalt der Dieneinheiten 75 bis 90 % beträgt,
oder ABC-Blockcopolymerisate aus
40 bis 75 % eines Blocks A aus Butadien- und Styrol- oder Isopreneinheiten mit einem Vinyl- bzw. Isopropylengruppengehalt (V) von weniger als 15 %,
bis 25 % eines Blocks B aus Butadien- und Styrol- oder Isopreneinheiten (V> 70 %) oder
bis 25 % eines Blocks B' aus Styrol-, Isopren- und gegebenenfalls Butadieneinheiten (V < 15 %) und
20 bis 55 % eines Blockes C aus Styrol-, Isopren- und gegebenenfalls Butadieneinheiten (V > 70 %)
oder Copolymerisate aus Butadien und Styrol mit
65 bis 85 % Butadien und
35 bis 15 % Styrol, wobei der Vinylgehalt der Dieneinheiten zwischen 35 bis 90 % beträgt,
mit einer Raumtemperaturelastizität ≤ 10 % (bei 22 °C) eingesetzt werden, die 10 bis 50 phr naphthenisches und/oder paraffinisches Öl mit Ruß und/oder einen mineralischen Füllstoff oder aromatisches Öl und einen mineralischen Füllstoff enthalten.

3. Reifenlaufflächen gemäß den Ansprüchen 1 oder 2,
**dadurch gekennzeichnet,**
**dass** als mineralische Füllstoffe Kieselsäure oder Kombinationen aus Ruß und Kieselsäuren eingesetzt werden.

4. Reifenlaufflächen gemäß den Ansprüchen 1 oder 2,
**dadurch gekennzeichnet,**
**dass** die Füllstoffe in Mengen von 50 bis 90 phr eingesetzt werden.

## Claims

1. Tyre treads which are based on copolymers of butadiene and isoprene and/or styrene and standard fillers and have improved rolling resistance and anti-skid behaviour when wet with ABS braking,
**characterised in that**
as the copolymers, AB block copolymers are used, comprising:
40 to 80% of a block A based on butadiene (uniformly distributed vinyl group content of between 8 and 60%),
60 to 20% of a block B based on
- up to 60% butadiene
- 0 to 60% isoprene and
- 0 to 45% styrene,
wherein the vinyl content of the diene units is between 75 and 90%,
or ABC block copolymers comprising
40 to 75% of a block A comprising butadiene and styrene or isoprene units having a vinyl or isopropylene group content (V) of less than 15%,
up to 25% of a block B comprising butadiene and styrene or isoprene units (V > 70%), or
up to 25% of a block B' comprising styrene, isoprene and possibly butadiene units (V < 15%), and
20 to 55% of a block C comprising styrene, isoprene and possibly butadiene units (V > 70%)
or copolymers of butadiene and styrene having
65 to 85% butadiene and 35 to 15% styrene, the vinyl content of the diene units being between 35 and 90%,
having a room temperature elasticity of between 10 and 40% (at 22°C) and containing 10 to 50 phr naphthenic and/or paraffinic oil with carbon black and/or a mineral filler.

2. Tyre treads which are based on copolymers of butadiene and isoprene and/or styrene and standard additives and have improved rolling resistance and anti-skid behaviour when wet with ABS braking,
**characterised in that**
as the copolymers, AB block copolymers are used, comprising:
40 to 80% of a block A based on butadiene (uniformly distributed vinyl group content of between 8 and 60%),
60 to 20% of a block B based on
- up to 60% butadiene
- 0 to 60% isoprene and
- 0 to 45% styrene,
wherein the vinyl content of the diene units is between 75 and 90%,
or ABC block copolymers comprising
40 to 75% of a block A comprising butadiene and styrene or isoprene units having a vinyl or isopropylene group content (V) of less than 15%,
up to 25% of a block B comprising butadiene and styrene or isoprene units (V > 70%), or
up to 25% of a block B' comprising styrene, isoprene and possibly butadiene units (V < 15%), and
20 to 55% of a block C comprising styrene, isoprene and possibly butadiene units (V > 70%)
or copolymers of butadiene and styrene having
65 to 85% butadiene and
35 to 15% styrene, the vinyl content of the diene units being between 35 and 90%,
having a room temperature elasticity of ≤10% (at 22°C) and containing 10 to 50 phr naphthenic and/or paraffinic oil with carbon black and/or a mineral filler or aromatic oil and a mineral filler.

3. Tyre treads according to claims 1 or 2,
**characterised in that**
silica or combinations of carbon black and silica are used as the mineral fillers.

4. Tyre treads according to claims 1 or 2,
**characterised in that**
the fillers are used in amounts of between 50 and 90 phr.

## Revendications

1. Bandes de roulement à base de copolymères contenant du butadiène et de l'isoprène et/ou du styrène et les charges habituelles, présentant une résistance au roulement améliorée et un comportement antidérapant au mouillé également amélioré lors du freinage avec antiblocage,
**caractérisées en ce que**
des copolymères à blocs AB sont mis en oeuvre comme copolymères, contenant
40 à 80 % d'un bloc A à base de budadiène (teneur de 8 à 60 % de groupes vinyle, régulièrement répartie),
60 à 20 % d'un bloc B à base de
- 60 % de butadiène ou moins,
- 0 à 60 % d'isoprène, et
- 0 à 45 % de styrène,
la teneur en vinyle des unités diéniques étant de 75 à 90 % ;
ou des copolymères à blocs ABC contenant
40 à 75 % d'un bloc A à base d'unités de butadiène et styrène ou isoprène, avec une teneur de groupe vinyle ou isopropylène (V) inférieure à 15 % ;
25 % ou moins d'un bloc B à base d'unités de butadiène et styrène ou isoprène (V > 70 %) ou
25 % ou moins d'un bloc B' à base d'unités de styrène, d'isoprène et, le cas échéant, de butadiène (V < 15 %) et
20 à 55 % d'un bloc C à base d'unités de styrène, d'isoprène et, le cas échéant, de butadiène (V > 70 %) ;
ou des copolymères à base de butadiène et styrène, avec
65 à 85 % de butadiène et
35 à 15 % de styrène, la teneur en vinyle des unités diéniques se situant entre 35 et 90 %,
l'élasticité à la température ambiante étant comprise entre 10 et 40 % (à 22 °C), et contenant 10 à 50 phr d'huile naphténique et/ou paraffinique, avec du noir de carbone et/ou une charge minérale ;

2. Bandes de roulement à base de copolymères contenant du butadiène et de l'isoprène et/ou du styrène et les charges habituelles, présentant une résistance au roulement améliorée et un comportement antidérapant au mouillé également amélioré lors du freinage avec antiblocage,
**caractérisées en ce que**
des copolymères à blocs AB sont mis en oeuvre comme copolymères, contenant
40 à 80 % d'un bloc A à base de budadiène (teneur de 8 à 60 % de groupes vinyle, régulièrement répartie),
60 à 20 % d'un bloc B à base de
- 60 % de butadiène ou moins,
- 0 à 60 % d'isoprène, et
- 0 à 45 % de styrène,
la teneur en vinyle des unités diéniques étant de 75 à 90 % ;
ou des copolymères à blocs ABC contenant
40 à 75 % d'un bloc A à base d'unités de butadiène et styrène ou isoprène, avec une teneur de groupe vinyle ou isopropylène (V) inférieure à 15 % ;
25 % ou moins d'un bloc B à base d'unités de butadiène et styrène ou isoprène (V > 70 %) ou
25 % ou moins d'un bloc B' à base d'unités de styrène, d'isoprène et, le cas échéant, de butadiène (V < 15 %) et
20 à 55 % d'un bloc C à base d'unités de styrène, d'isoprène et, le cas échéant, de butadiène (V > 70 %) ;
ou des copolymères à base de butadiène et styrène, avec
65 à 85 % de butadiène et
35 à 15 % de styrène, la teneur en vinyle des unités diéniques se situant entre 35 et 90 %,
l'élasticité à la température ambiante étant ≤ 10 % (à 22 °C), et contenant 10 à 50 phr d'huile naphténique et/ou paraffinique, avec du noir de carbone et/ou une charge minérale ou encore une huile aromatique avec une charge minérale ;

3. Bandes de roulement conformément aux revendications 1 ou 2,
**caractérisées en ce que**
les charges minérales mises en oeuvre consistent en de l'acide silique ou en des combinaisons de noir de carbone et d'acides siliques ;

4. Bandes de roulement conformément aux revendications 1 ou 2,
**caractérisées en ce que**
les charges mises en oeuvre représentent des quantités de 50 à 90 phr.
